# EUROPÄISCHE PATENTSCHRIFT

(11) **EP 0 854 009 B1**
(45) Veröffentlichungstag und Bekanntmachung des Hinweises auf die Patenterteilung: **06.02.2008**
(21) Anmeldenummer: 97121401.0
(22) Anmeldetag: 05.12.1997
(51) Int. Cl.: B23Q 11/10, B23Q 5/40, F16H 57/04

(54) **Durch einen Spindelantrieb hin und her bewegbarer Schlitten**
Reciprocating carriage driven by a spindle drive
Chariot entraîné à mouvement aller et retour par une broche d'entraînement

(30) Priorität: 16.01.1997 DE 29700713 U
(43) Veröffentlichungstag der Anmeldung: 22.07.1998
(73) Patentinhaber: RK Rose + Krieger GmbH & Co. KG Verbindungs- und Positioniersysteme, D-32423 Minden (DE)
(72) Erfinder: Meier, Jürgen, 31604 Raddestorf (DE)
(74) Vertreter: Stracke, Alexander

(56) Entgegenhaltungen:
- WO-A-79/00553
- DE-A- 4 340 078
- DE-A- 4 435 759
- FR-A- 2 309 463
- FR-A- 2 388 178
- GB-A- 1 108 542
- GB-A- 2 021 013
- US-A- 3 064 758

## Beschreibung

Die vorliegende Erfindung betrifft einen durch einen Spindelantrieb hin und her bewegbaren Schlitten.

Es sind Spindelantriebe bekannt, bei denen eine Schmierung hauptsächlich durch direktes Aufbringen des Schmiermittels auf die Spindel erfolgt.

Dies setzt natürlich einen freien Zugang zur Spindel voraus, der jedoch dann nicht gegeben ist, wenn diese in einem mit einem Abdeckband verschlossenen Profilrohr geführt ist, auf dem der Schlitten hin und her bewegbar gelagert ist.

Um in diesem Fall eine Schmierung zu ermöglichen, müssen in dem Profilrohr Bohrungen vorgesehen sein, durch die das Schmiermittel eingebracht werden kann.

Abgesehen davon, daß hierzu das Profilrohr entsprechend bearbeitet werden muß wobei die Schmiermittelöffnungen nach Gebrauch zu verschließen sind, da aus Platzgründen im Regelfall keine Schmiernippel eingebaut werden können, ist das Einbringen des Schmiermittels in den Bedarfsbereich, also in den Bereich, in dem eine mit dem Schlitten verbundene Leitmutter die Spindel umschließt, nicht möglich.

Es kann also durchaus sein, daß die Schmiermittelöffnung nicht in dem Bereich liegt, der von dem Schlitten bzw. der Leitmutter während des Betriebes überfahren wird. In diesem Fall muß nach der Montage und dem Einrichten möglicherweise eine zusätzliche Schmiermittelöffnung in das Profilrohr eingebracht werden.

Naturgemäß ist dies alles mit einem erheblichen Aufwand verbunden, der nicht nur die Herstellungs- sondern auch die Betriebskosten sehr nachteilig beeinflußt.

Ein gattungsgemäßer Schlitten ist aus der FR-A-2 388 178 bekannt. Darin ist eine Konstruktion gezeigt und beschrieben, bei der ein Schmiermittel integraler Bestandteil der Leitmutter ist.

Der vorliegenden Erfindung liegt die Aufgabe zugrunde, einen Schlitten der gattungsgemäßen Art so zu gestalten, daß eine einfache und zuverlässige Schmierung zwischen der Leitmutter und der Spindel möglich ist.

Diese Aufgabe wird durch einen Schlitten gelöst, der die Merkmale des Anspruches 1 aufweist.

Bei einem solcherart gestalteten Schlitten ist gewährleistet, daß das Schmiermittel in dem Bereich wirksam ist, in dem eine Schmierung erfolgen soll, also im Eingriffsbereich der Leitmutter.

Ein weiterer Vorteil der Erfindung liegt darin, daß das Einbringen des Schmiermittels, üblicherweise Schmierfett, sehr einfach möglich ist, beispielsweise mittels einer Fettpresse.

Erfindungsgemäß sind die Schmierbuchse und die Leitmutter unmittelbar benachbart im Schlitten angeordnet. Dabei ist der gebildete Spalt zwischen der Schmierbuchse und der Spindel gering gehalten, wodurch sich eine optimale Verteilung des Schmiermittels ergibt.

Zur Verdrehsicherung der Schmierbuchse ist diese beispielsweise mittels einer Halterung in Verbindung mit einem Gewindestift an der Leitmutter angeschlossen.

Durch eine Stecknippelverschraubung wird eine einfache Montage bzw. eine einfache Verbindung zwischen der Gewindebuchse, der Leitung und dem Schmiernippel möglich.

Weitere vorteilhafte Ausgestaltungen sind in den Unteransprüchen gekennzeichnet.

Ein Ausführungsbeispiel der Erfindung wird nachfolgend anhand der beigefügten Zeichnungen beschrieben.

Es zeigen:

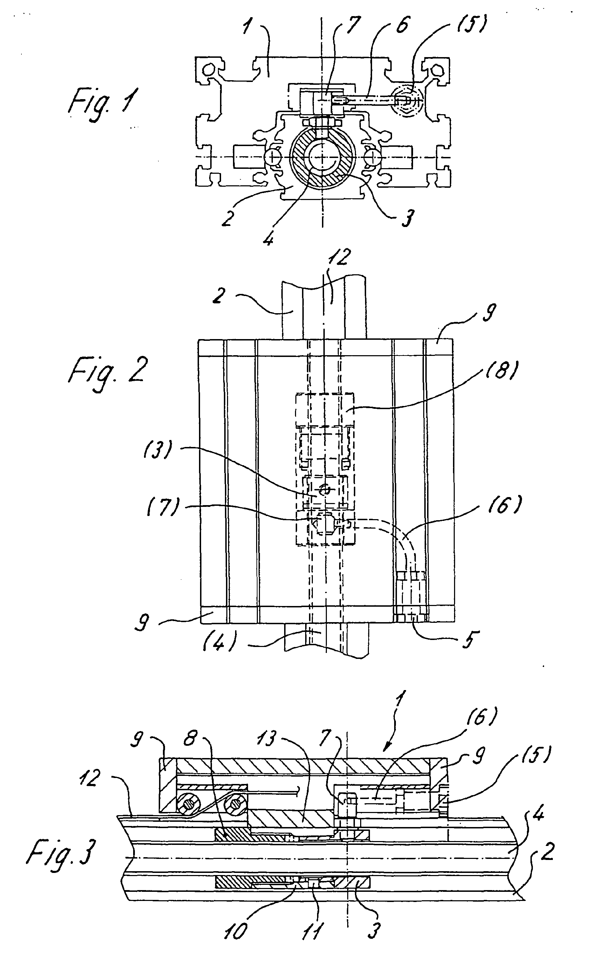

- Figur 1: einen erfindungsgemäßen Schlitten in einer geschnittenen Vorderansicht,
- Figur 2: eine Draufsicht auf den Schlitten,
- Figur 3: einen Längsschnitt durch den Schlitten.

In den Figuren ist ein Schlitten 1 gezeigt, der eine Leitmutter 8 aufweist, die mit einer Spindel 4 in Verbindung steht, durch deren Drehung der Schlitten 1 hin und her bewegbar ist.

Dabei ist die Spindel 4 in einem Profilrohr 2 gelagert, auf dem der Schlitten 1 geführt ist.

Vom Schlitten 1 überdeckt, unmittelbar benachbart der Leitmutter 8 und über eine Halterung 10 und einen Gewindestift 11 mit dieser verdrehsicher verbunden ist eine Schmierbuchse 3, die mit geringem Spalt die Spindel 4 umschließt.

Mittels einer Steckverschraubung 7 ist die Schmierbuchse 3 an eine Leitung 6 angeschlossen, an der am anderen Ende ein Schmiernippel 5 befestigt ist. Dieser ist in eine Verschlußplatte 9 eingefügt und von außen frei zugänglich, wobei beide Stirnseiten des Schlittens 1 durch eine Verschlußplatte 9 verschlossen sind.

In bekannter Weise ist ein sich in Längsachsrichtung des Profilrohres 2 erstreckender Schlitz, der von einer Aufhängung 13 der Leitmutter 8 durchtreten wird, mit einem Abdeckband 12, das durch den Schlitten geführt wird, verschlossen.

## Patentansprüche

1. Durch einen Spindelantrieb, der eine Spindel (4) und eine Leitmutter (8) aufweist hin und her bewegbarer Schlitten (1), **dadurch gekennzeichnet, daß** in dem Schlitten (1) unmittelbar benachbart der Leitmutter (8), eine Schmierbuchse (3) befestigt ist, die die Spindel (4) umschließt und die über eine angeschlossene Leitung (6) mit einem außen am Schlitten (1) angeordneten Schmiernippel (5) in Verbindung steht.

2. Schlitten nach Anspruch 1, **dadurch gekennzeichnet, daß** die Leitung (6) durch eine Steckverschraubung (7) mit der Schmierbuchse (3) verbunden ist.

3. Schlitten nach Anspruch 1, **dadurch gekennzeichnet, daß** die Schmierbuchse (3) verdrehsicher gehalten ist.

4. Schlitten nach Anspruch 3, **dadurch gekennzeichnet, daß** die Schmierbuchse (3) zur Verdrehsicherung über eine Halterung (10) und einen Gewindestift (11) mit der Leitmutter (8) verbunden ist.

5. Schlitten nach Anspruch 1, **dadurch gekennzeichnet, daß** der Schmiernippel (5) in einer stirnseitig des Schlittens (1) angeordneten Verschlußplatte (9) festgelegt ist.

6. Schlitten nach Anspruch 1, **dadurch gekennzeichnet, daß** die Schmierbuchse (3) unmittelbar benachbart der Leitmutter (8) plaziert ist.

7. Schlitten nach Anspruch 1, **dadurch gekennzeichnet, daß** die Schmierbuchse (3) die Spindel (4) in geringem Abstand umschließt.

## Claims

1. Reciprocating carriage (1) driven by a spindle drive which has a spindle (4) and a lead nut (8), **characterized in that** a grease cup (3) is fastened in the carriage (1) directly adjacent to the lead nut (8), said grease cup (3) enclosing the spindle (4) and being connected via an attached line (6) to a lubricating nipple (5) arranged on the outside of the carriage (1).

2. Carriage according to Claim 1, **characterized in that** the line (6) is connected to the grease cup (3) by a push-in fitting (7).

3. Carriage according to Claim 1, **characterized in that** the grease cup (3) is held in a rotationally locked manner.

4. Carriage according to Claim 3, **characterized in that** the grease cup (3), for the rotational locking, is connected to the lead nut (8) via a retainer (10) and a headless setscrew (11).

5. Carriage according to Claim 1, **characterized in that** the lubricating nipple (5) is fixed in a closure plate (9) arranged at the end face of the carriage (1).

6. Carriage according to Claim 1, **characterized in that** the grease cup (3) is placed directly adjacent to the lead nut (8).

7. Carriage according to Claim 1, **characterized in that** the grease cup (3) encloses the spindle (4) at a slight distance apart.

## Revendications

1. Chariot (1) à mouvement de va-et-vient par un entraînement par broche, qui présente une broche (4) et un écrou guidé (8), **caractérisé en ce qu'**une douille de graissage (3), qui entoure la broche (4) et qui communique avec un graisseur (5) disposé à l'extérieur au niveau du chariot (1) par le biais d'une conduite raccordée (6), est fixée dans le chariot (1) à proximité immédiate de l'écrou guidé (8).

2. Chariot selon la revendication 1, **caractérisé en ce que** la conduite (6) est reliée à la douille de graissage (3) par un vissage enfichable (7).

3. Chariot selon la revendication 1, **caractérisé en ce que** la douille de graissage (3) est maintenue bloquée en rotation.

4. Chariot selon la revendication 3, **caractérisé en ce que** la douille de graissage (3) est reliée à l'écrou guidé (8) pour le blocage en rotation par le biais d'une fixation (10) et d'une tige filetée (11).

5. Chariot selon la revendication 1, **caractérisé en ce que** le graisseur (5) est fixé dans une plaque de fermeture (9) disposée à l'avant du chariot (1).

6. Chariot selon la revendication 1, **caractérisé en ce que** la douille de graissage (3) est placée à proximité immédiate de l'écrou guidé (8).

7. Chariot selon la revendication 1, **caractérisé en ce que** la douille de graissage (3) entoure la broche (4) à faible distance.
